# EUROPEAN PATENT SPECIFICATION

(11) **EP 2 492 198 B1**
(45) Date of publication and mention of the grant of the patent: **02.04.2014**
(21) Application number: 12155868.8
(22) Date of filing: 17.02.2012
(51) Int. Cl.: B64D 11/06

(54) **Seat assembly for a vehicle**
Fahrzeugsitzanordnung
Assemblage de siège pour un véhicule

(30) Priority: 24.02.2011 GB 201103202
(43) Date of publication of application: 29.08.2012
(73) Proprietor: NP Aerospace Limited, Coventry CV6 5AQ (GB)
(72) Inventor: Medwell, Roger Terence Arthur, Coventry CV3 6RE (GB)
(74) Representative: Hanson, William Bennett

(56) References cited:
- EP-A1- 0 945 302
- EP-A2- 2 127 940
- US-A- 3 314 720

## Description

### Background to the Invention

This invention relates to a seat assembly for a vehicle for use by security and defense forces.

A known seat is formed from metal. When a vehicle is penetrated by a projectile or blast wave, parts or components of the seat itself can injure or even kill occupants.

EP 2127940 A2 describes a seat assembly according to the preamble of claim 1.

EP 0945302 A1 describes a seat assembly having a pad of compressible material on a surface facing away from an occupant.

### Summary of the Invention

The present invention provides a vehicle seat assembly according to claim 1.

In a particular embodiment of the invention no structural part of the seat assembly is metallic. Thus, where the vehicle hull is non-metallic, there is no structural metal between an occupant and a threat.

Flexible straps may be provided at both a top part and a bottom part of the seat. The protective panel may for example be of ultra high molecular weight polyethylene fiber.

The pad of compressible material, for example closed cell polyethylene, polyurethane or polystyrene foam, may be attached to a back of the seat.

### Brief Description of the Drawings

The invention will now be described in more detail, by way of example only, with reference to the accompanying drawings, in which:

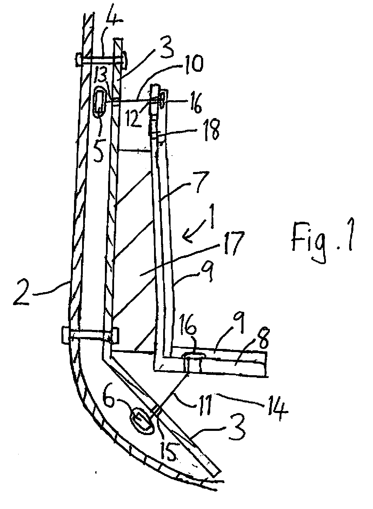

Figure 1 is a schematic sectional view of a seat assembly according to an embodiment of the invention; and

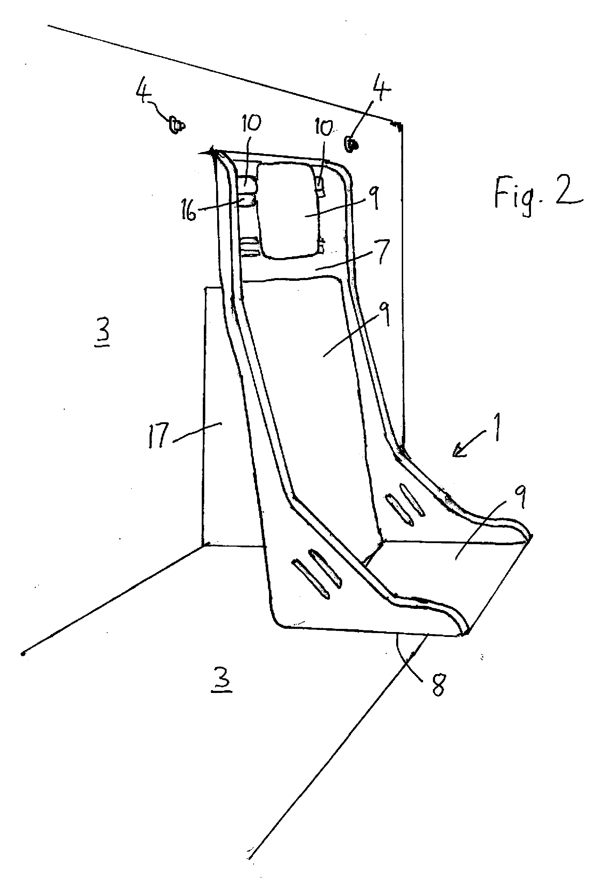

Figure 2 is a perspective view of the seat assembly of Figure 1.

### Detailed Description of Particular Embodiments

The drawings show a seat assembly comprising a seat 1 fixed to the inside of a vehicle hull 2. A non-metallic spall armor panel 3 is attached to the hull 2, in this example by means of bolts 4 which are arranged at heights not coinciding with the seat 1. The panel 3 can be of ultra height molecular weight polyethylene, such as Dyneema ® from Royal DSM NV of Heerlen, Netherlands. In this example the panel conforms to the shape of the hull 2 so that a lower part of the panel 3 is at an angle to the main upper part.

A horizontal upper bar 5 is mounted behind the panel 3 near its upper edge, and a horizontal lower bar 6 is mounted behind the panel 3 near its lower edge. In this example the bars 5, 6 are of carbon fiber.

The seat 1 is formed from a non-metallic material, in this example from S-2 Glass ® from AGY of Aiken, SC, USA. The seat has a seat back 7 and a seating portion 8. The seat can be provided with cushions 9, for example at the seating portion and the back and at a head location.

The seat is suspended by straps 10, 11 in the form of nylon webbing. Two upper straps 10 pass though respective apertures 12 near the top of the seat back 7, through upper panel apertures 13 in the panel 3 and around the anchoring upper bar 5. Two lower straps 11 pass through respective lower apertures 14 in the seating portion 8, through lower panel apertures 15 in the lower part of the panel 3 and around the lower anchoring bar 6. The straps 10, 11 can be anchored to the seat 1 by means of buckles 16.

The bars 5, 6 can be long enough to anchor a plurality of seats arranged in a row thereby.

A compressible pad 17, which can be formed of closed cell polyethylene, polyurethane or polystyrene foam, is bonded to the outside of the seat back 7 and therefore interposed between the seat 1 and the panel 3. The pad 17 can be profiled, e.g. tapering upwardly if the seat has a sloping back 7.

The seat is provided with further apertures 18 in its back 7 and sides for attaching a seat belt or a harness.

There is no structural metal in the seat assembly, thus preventing the creation of secondary metallic projectiles in the event of an overmatching blast or impact.

Injuries in the event of a blast in known vehicles are often caused by rapid acceleration of an occupant's torso. In the present invention, such acceleration is reduced by flexing of the composite vehicle hull 2, flexing of the spall panel 3, stretching of the straps 10, 11 and flexing of the seat 1 itself. Most significantly such acceleration of the torso is reduced by compression of the compressible pad 17. The thickness of the pad and density of the foam can be selected to optimize this performance.

Modifications which do not depart from the scope of the invention as defined by the appended claims will occur to those skilled in the art. Thus the seat could have lateral head restraints. In one embodiment, the straps 10, 11 in the form of nylon webbing are replaced by ropes or cords.

## Claims

1. A vehicle seat assembly comprising a seat (1), at least one flexible strap (10, 11) for suspending the seat from a part (5, 6) of the vehicle or of the seat assembly, **characterized in that** a pad (17) of compressible foam is arranged to be interposed between a surface of the seat (1) facing away from an occupant, and a vehicle hull (2), and **in that** the assembly comprises a protective panel (3), mountable to the inside of the vehicle hull (2), the strap(s) (10, 11) extending through apertures (13, 15) in the panel (3) to at least one anchorage (5, 6) behind the panel.

2. A seat assembly according to claim 1, wherein no structural part of the seat assembly is metallic.

3. A seat assembly according to claim 1 or 2, wherein flexible straps (10, 11) for suspending the seat are provided at both a top part and a bottom part of the seat (1).

4. A seat assembly according to claim 1, 2 or 3, wherein the protective panel (3) is of ultra high molecular weight polyethylene fiber.

5. A seat assembly according to any preceding claim, wherein the at least one anchorage is in the form of a horizontal bar (5, 6).

6. A seat assembly according to any preceding claim, wherein the pad (17) of compressible material is of closed cell polyethylene, polyurethane or polystyrene foam.

7. A seat assembly according to any preceding claim, wherein the pad (17) of compressible material is attached to a back (7) of the seat (1).

## Patentansprüche

1. Sitzanordnung für ein Fahrzeug, umfassend einen Sitz (1), mindestens einen flexiblen Gurt (10, 11) zum Aufhängen des Sitzes an einem Teil (5, 6) des Fahrzeugs oder der Sitzanordnung, **dadurch gekennzeichnet, dass** ein Polster (17) aus kompressiblem Schaum dazu vorgesehen ist, zwischen einer von einem Nutzer abgewandten Oberfläche des Sitzes (1) und einem Fahrzeugrumpf (2) eingefügt zu werden, und dass die Anordnung eine Schutzplatte (3) umfasst, welche auf der Innenseite des Fahrzeugrumpfes (2) montierbar ist, wobei sich der mindestens eine Gurt (10, 11) durch Öffnungen (13, 15) in der Platte (3) hindurch zu mindestens einer Verankerung (5, 6) hinter der Platte hin erstreckt.

2. Sitzanordnung nach Anspruch 1, wobei kein Bauteil der Sitzanordnung aus Metall ist.

3. Sitzanordnung nach Anspruch 1 oder 2, wobei flexible Gurte (10, 11) zum Aufhängen des Sitzes sowohl in einem oberen Bereich als auch in einem unteren Bereich des Sitzes (1) vorgesehen sind.

4. Sitzanordnung nach einem der Ansprüche 1 bis 3, wobei die Schutzplatte (3) aus ultrahochmolekulargewichtigen Polyethylenfasern gefertigt ist.

5. Sitzanordnung nach einem der Ansprüche 1 bis 4, wobei die mindestens eine Verankerung in Form eines horizontalen Riegels (5, 6) ausgebildet ist.

6. Sitzanordnung nach einem der Ansprüche 1 bis 5, wobei das Polster (17) aus kompressiblem Material aus geschlossenzelligem Polyethylen-, Polyurethan- oder Polystyrenschaum besteht.

7. Sitzanordnung nach einem der Ansprüche 1 bis 6, wobei das Polster (17) aus kompressiblem Material an einer Rückseite (7) des Sitzes (1) befestigt ist.

## Revendications

1. Ensemble de siège pour véhicule comprenant un siège (1), au moins une sangle flexible (10, 11) pour suspendre le siège depuis une partie (5, 6) du véhicule ou de l'ensemble de siège, **caractérisé en ce qu'**un coussinet (17) en mousse compressible est agencé pour être intercalé entre une surface du siège (1) éloignée de l'occupant, et la coque (2) du véhicule, et **en ce que** l'ensemble comprend un panneau protecteur (3) pouvant être monté sur l'intérieur de la coque (2) du véhicule, la/les sangle(s) (10, 11) s'étendant à travers des ouvertures (13, 15) ménagées dans le panneau (3) jusqu'à au moins un ancrage (5, 6) à l'arrière du panneau.

2. Ensemble de siège selon la revendication 1, dans lequel aucune pièce de la structure de l'ensemble de siège n'est métallique.

3. Ensemble de siège selon la revendication 1 ou 2, dans lequel les sangles flexibles (10, 11) pour suspendre le siège sont prévues à la fois en haut et en bas du siège (1).

4. Ensemble de siège selon la revendication 1, 2 ou 3, dans lequel le panneau protecteur (3) est en fibre polyéthylène à ultra-haut poids moléculaire.

5. Ensemble de siège selon l'une quelconque des revendications précédentes, dans lequel le au moins un ancrage se présente sous la forme d'une barre horizontale (5, 6).

6. Ensemble de siège selon l'une quelconque des revendications précédentes, dans lequel le coussinet (17) en matériau compressible est fabriqué en mousse de polyéthylène, de polyuréthane ou de polystyrène à alvéoles fermés.

7. Ensemble de siège selon l'une quelconque des revendications précédentes, dans lequel le coussinet (17) en matériau compressible est fixé à l'arrière (7) du siège (1).
